# EUROPÄISCHE PATENTSCHRIFT

(11) **EP 3 847 215 B1**
(45) Veröffentlichungstag und Bekanntmachung des Hinweises auf die Patenterteilung: **23.03.2022**
(21) Anmeldenummer: 18773102.1
(22) Anmeldetag: 06.09.2018
(51) Int. Cl.: C08L 31/04, C09K 17/20, E02D 3/12, C04B 24/26, C04B 24/38, C08L 29/04, C08L 33/26

(54) **IN WASSER REDISPERGIERBARE POLYMERPULVER-ZUSAMMENSETZUNGEN**
POLYMER POWDER COMPOSITIONS REDISPERSIBLE IN WATER
COMPOSITIONS DE POLYMÈRES EN POUDRE REDISPERIBLES DANS L'EAU

(43) Veröffentlichungstag der Anmeldung: 14.07.2021
(73) Patentinhaber: Wacker Chemie AG, 81737 München (DE)
(72) Erfinder: HASHEMZADEH, Abdulmajid, 84489 Burghausen (DE)
(74) Vertreter: Ege, Markus
(86) Internationale Anmeldenummer: PCT/EP2018/074048
(87) Internationale Veröffentlichungsnummer: WO 2020/048603

(56) Entgegenhaltungen:
- WO-A1-2007/093551
- WO-A1-2015/071108
- WO-A1-2016/058867
- CN-A- 106 145 827

## Beschreibung

Die Erfindung betrifft in Wasser redispergierbare Polymerpulver-Zusammensetzungen (Dispersionspulver-Zusammensetzungen) zur Bodenstabilisierung (Bodenverfestigung), Verfahren zur Herstellung der Dispersionspulver-Zusammensetzungen und deren Verwendung zur Bodenstabilisierung (Soil Stabilization) und Sandbindung.

Staubbekämpfung und Bodenstabilisierung sind ein großes Umwelt-und Gesundheitsproblem. Staub wird oft nur als lästig empfunden, dabei kann starke Staubentwicklung auch die Sicherheit beeinträchtigen, beispielsweise durch Sichtbehinderung auf Sandstraßen und Baustellen. Staub ist auch gesundheitlich bedenklich, vor allem durch dessen Anteil an lungengängigem Feinstaub. Bei Sandstraßen ist neben der Staubreduzierung auch eine längere Haltbarkeit verbunden mit einem geringeren Instandhaltungsaufwand ein wichtiger wirtschaftlicher Faktor. Mittels Bodenstabilisierung kann sowohl die Winderosion als auch die Wassererosion verzögert werden und somit die Entstehung von Schlaglöchern und Spurrillen vermindert werden.

Das gängigste Mittel Staub zu reduzieren ist, die Oberfläche mit Wasser feucht zu halten, was aber in warmen, trockenen Regionen nur sehr kurzfristig hilft. Lange wurden auch Mineralölprodukte auf die Oberfläche von unbefestigten Straßen versprüht, mit allen damit verbundenen Nachteilen für die Umwelt. In der EP 0 992 565 A1 wird ein Verfahren zur Festigung und Hydrophobierung von Bodenmaterialien beschrieben, bei welchem Alkalisilikate und Alkalisilikonate eingesetzt werden. In der US 2011/0274489 A1 und der US 8,033,750 B2 werden Mischungen aus Hydrophobierungsmitteln (Methylsilikonat) und wässrigen Polymerdispersionen (Polyacrylsäure und Polyvinylacetat) zur Bodenstabilisierung verwendet. Die US 2011/0274490 A1 beschreibt ein Mittel zur Bodenverfestigung enthaltend eine wässrige Polymerdispersion und eine wässrige Emulsion von Pech und Kolophonium. In der DE OS 2210256 und in der DE 43 24 474 A1 wird jeweils die Bodenverfestigung mittels Eintrag von wässrigen Polymerdispersionen beschrieben. Die WO 2018/090105 A1 betrifft eine Zusammensetzung zur Bodenverfestigung, welche ein erstes Polymer mit Acrylamideinheiten, ein zweites Polymer mit Acrylatmonomereinheiten enthält und Lösungsmittel, wobei die beiden Polymere vernetzt werden. Die Bodenverfestigung mittels in Wasser redispergierbaren Polymerpulver-Zusammensetzungen ist in der WO 2006/063729 A1 beschrieben. Die Verfestigung von Sand in Pflasterfugen mittels in Wasser redispergierbarer Polymerpulver und Zement ist in der EP 1 892 228 A1 beschrieben.

Die Verwendung von anionischen und nichtionischen Acrylamidpolymerisaten zur Bodenstabilisierung ist in Illinois Urban Manual Practice Standard, Polyacrylamid (PAM) for Temporary Soil Stabilization, February 2011 (http://www.aiswcd.org/illinoisurban-manual/practice-standards/) beschrieben. In der US 2016/0177179 A1 und in der WO 2016/071157 A1 werden jeweils in Wasser lösliche oder quellbare Flockulierungsmittel, wie ultrahochmolekulare Acrylamid-Acrylsäure-Copolymere, zur Bodenverfestigung eingesetzt, wobei diese als Flüssigkeit oder als Pulver appliziert werden. Die Bodenverfestigung kommt dabei durch die Agglomeration (Flockung) der Staub- und Sandpartikel zustande. Diese Art der Bodenbefestigung und Staubbindung ist nur für kurzzeitige Stabilisierung geeignet. Problematisch ist auch die schlechte Löslichkeit dieser Flockulierungsmittel in Wasser und deren Feuchtigkeitsempfindlichkeit bei Lagerung (US 7,874,101 B2).

Eine längere Dauer der Stabilisierung könnte dadurch erreicht werden, indem das Flockulierungsmittel zusammen mit einem organischen, polymeren Bindemittel, beispielsweise Polyvinylacetat, appliziert wird. Wesentlich bei der Anwendung eines Gemisches von polymerem Binder und Flockulierungsmittel ist aber die schnelle und gleichmäßige Verteilung der Mischungskomponenten. Diese wird jedoch dadurch erschwert, dass in solchen Mischungen der überwiegende Anteil das polymere Bindemittel wäre und der Anteil an Flockulierungsmittel meist sehr gering ist, beispielsweise 0,1 bis 2 Gew.-%, bezogen auf den Gesamtfeststoffgehalt der Mischung. Bei den ultrahochmolekularen Flockulierungsmitteln (Brookfield-Viskosität von mindestens 20 mPas in 1 Gew-%-iger wässriger Lösung bei 23°C) wird deren Applikation auch noch durch deren schlechte Löslichkeit in Wasser und schlechte Mischbarkeit mit polymeren Bindemitteln erschwert.

Bei der Anwendung in flüssiger Form oder in Pulverform sind die unterschiedlichen Löslichkeiten, oder bei Pulvern die unterschiedlichen Korngrößen, Dichten und Pulvermorphologien, Ursache dafür, dass mit herkömmlichen Methoden zur Abmischung keine homogenen Zusammensetzungen erhalten werden. Darüber hinaus gibt es bei Pulvermischungen von polymeren Bindern und Flockulierungsmitteln das Problem, dass bei Lagerung im Silo oder in der Verpackung Entmischungen (Inhomogenitäten) auftreten.

Es bestand daher die Aufgabe, eine Darreichungsform zu entwickeln, mit der die obengenannten Nachteile bei der Verwendung von ultrahochmolekularen Flockulierungsmitteln als Additive zur Bodenverfestigung überwunden werden.

Gegenstand der Erfindung ist eine in Wasser redispergierbare Polymerpulver-Zusammensetzung enthaltend
a) ein Basispolymerisat von einem oder mehreren Monomeren aus der Gruppe enthaltend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide,
b) ein oder mehrere Flockulierungsmittel aus der Gruppe enthaltend Acrylamid-Homo- oder Acrylamid-Copolymerisaten von einem oder mehreren Monomeren aus der Gruppe enthaltend Acrylamid, Methacrylamid, Acrylsäure, Methacrylsäure, Acrylnitril, 2-Acrylamido-2-methylpropansulfonsäure, wobei die Flockulierungsmittel b) jeweils in 1 Gew%-iger Lösung in Wasser bei 23°C eine Brookfield-Viskosität von mindestens 20 mPas aufweisen.

Die Bestimmung der Brookfield-Viskosität der 1 Gew.%-igen Lösung in Wasser erfolgt mit einem Brookfieldviskosimeter, nach Temperierung auf 23°C, unter Verwendung von Spindel 1 bzw. 2, bei 20 Umdrehungen pro Minute.

Als in Wasser redispergierbare Polymerpulver-Zusammensetzungen bezeichnet man Pulverzusammensetzungen, welche mittels Trocknung der entsprechenden wässrigen Dispersionen der Basispolymerisate in Gegenwart von Schutzkolloiden (Trocknungshilfe) zugänglich werden. Aufgrund dieses Herstellungsprozesses wird das feinteilige Harz (Basispolymerisat) der Dispersion, und bei der vorliegenden Erfindung auch das Flockulierungsmittel, mit einem wasserlöslichen Schutzkolloid ausreichender Menge umhüllt. Bei der Trocknung wirkt das Schutzkolloid wie ein Mantel, welcher das Zusammenkleben der Teilchen verhindert. Beim Redispergieren in Wasser löst sich das Schutzkolloid rasch wieder in Wasser und es liegt eine wässrige Dispersion der ursprünglichen Polymerteilchen mit darin gelöstem Schutzkolloid und Flockulierungsmittel vor.

Als Flockulierungsmittel b) geeignet sind Acrylamid-Homopolymerisate und Acrylamid-Copolymerisate von einem oder mehreren Monomeren aus der Gruppe enthaltend Acrylamid, Methacrylamid, Acrylsäure, Methacrylsäure, Acrylnitril, 2-Acrylamido-2-methyl-propansulfonsäure (AMPS) wie in der WO 2016/071157 beschrieben. Die Acrylamid-Homopolymerisate und Acrylamid-Copolymerisate können mittels dem Fachmann bekannter Polymerisationsverfahren hergestellt werden. Für die Herstellung der in Wasser redispergierbaren Polymerpulver-Zusammensetzungen geeignete Acrylamid-Homopolymerisate und Acrylamid-Copolymerisate sind auch im Handel erhältlich. Die Acrylamid-Homopolymerisate und Acrylamid-Copolymerisate sind in Wasser quellbar oder in Wasser löslich.

Bevorzugt werden als Flockulierungsmittel b) die Copolymerisate des Acrylamids. Mehr bevorzugt werden die Copolymerisate des Acrylamids mit Acrylsäure und/oder AMPS. Am meisten bevorzugt werden als Flockulierungsmittel b) Copolymerisate, welche 60 bis 90 Gew.-% Acrylamid-Einheiten und 10 bis 40 Gew.-% Acrylsäure-Einheiten enthalten, wobei sich die Angaben in Gew.-% jeweils auf 100 Gew.-% aufaddieren.

Im Allgemeinen haben die Acrylamid-Homopolymerisate und Acrylamid-Copolymerisate ein gewichtsmittleres Molekulargewicht Mw von 1.000.000 g/mol bis 30.000.000 g/mol, vorzugsweise von 5.000.000 g/mol bis 30.000.000 g/mol, bestimmt mittels Size Exclusion Chromatography (SEC) gegen Polystyrol-Standard, in THF, bei 40°C.

Die genannten Flockulierungsmittel haben jeweils in 1 Gew%-iger Lösung in Wasser bei 23°C eine Brookfield-Viskosität von mindestens 20 mPas, vorzugsweise von mindestens 50 mPas.

Die in Wasser redispergierbaren Polymerpulver-Zusammensetzungen enthalten im Allgemeinen 0,05 bis 2,0 Gew.-%, bevorzugt 0,1 bis 1,0 Gew.-%, der Flockulierungsmittel b), jeweils bezogen auf das Gesamtgewicht der polymeren Bestandteile der in Wasser redispergierbaren Polymerpulver-Zusammensetzung.

Für die Herstellung der wässrigen Polymerdispersion des Basispolymerisats geeignete Monomere sind Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene oder Vinylhalogenide.

Bevorzugte Vinylester sind Vinylacetat, Vinylpropionat, Vinylbutyrat, Vinyl-2-ethylhexanoat, Vinyllaurat, 1-Methyl-vinylacetat, Vinylpivalat und Vinylester von alpha-verzweigten Monocarbonsäuren mit 9 bis 13 C-Atomen, beispielsweise VeoVa9^{®} oder VeoVa10^{®} (Handelsnamen der Firma Momentive). Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat.

Beispiele für Olefine und Diene sind Ethylen, Propylen und 1,3-Butadien. Geeignete Vinylaromaten sind Styrol und Vinyltoluol. Ein bevorzugtes Vinylhalogenid ist Vinylchlorid.

Gegebenenfalls können noch 0,05 bis 10 Gew.-%, bezogen auf das Gesamtgewicht der Monomere, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfon-säure. Geeignete Hilfsmonomere sind auch epoxidfunktionelle Comonomere wie Glycidylmethacrylat und Glycidylacrylat für vernetzbare Basispolymerisate. Weitere Beispiele sind siliciumfunktionelle Comonomere, wie Acryloxypropyltri(alkoxy)- und Me-thacryloxypropyltri(alkoxy)-Silane wie Methacryloxypropyltrimethoxysilan, Vinyltrialkoxysilane und Vinylmethyldialkoxysilane wie Vinyltrimethoxysilan oder Vinyltriethoxysilan oder Vinylmethyldimethoxysilan, wobei als Alkoxy-gruppen beispielsweise Methoxy-, Ethoxy- und Ethoxypropylenglykolether-Reste enthalten sein können.

Die Monomerauswahl bzw. die Auswahl der Gewichtsanteile der Comonomere erfolgt dabei so, dass im Allgemeinen eine Glasübergangstemperatur Tg von -30°C bis +40°C resultiert. Die Glasübergangstemperatur Tg der Basispolymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Masse¬bruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Beispiele für als Basispolymerisat geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate und Mischpolymerisate von Vinylacetat mit 1 bis 40 Gew.-% Ethylen, welche gegebenenfalls noch weitere Comonomere enthalten aus der Gruppe Vinylchlorid und Vinylester mit 3 bis 12 C-Atomen im Carbonsäurerest, wobei jeweils noch die genannten Hilfsmonomere in den genannten Mengen copolymerisiert werden können, und sich die Angaben in Gew.-% auf jeweils 100 Gew.-% aufaddieren.

Am meisten bevorzugt werden die Polymerpulver-Zusammensetzungen mit Vinylacetat-Homopolymerisat oder mit Mischpolymerisaten von Vinylacetat und 1 bis 40 Gew.-% Ethylen.

Die Herstellung der Basispolymerisate erfolgt bevorzugt nach dem Emulsionspolymerisationsverfahren, wobei die Polymerisationstemperatur im Allgemeinen, aber nicht notwendigerweise weniger als 100°C beträgt, und bei der Copolymerisation von gasförmigen Comonomeren wie Ethylen auch unter Druck, im Allgemeinen zwischen 5 bar und 100 bar, gearbeitet werden kann. Die Initiierung der Polymerisation erfolgt mit den für die Emulsionspolymerisation gebräuchlichen Initiatoren oder Redox-Initiator-Kombinationen.

Zur Stabilisierung des Polymerisationsansatzes werden Schutzkolloide, gegebenenfalls in Kombination mit Emulgatoren, eingesetzt. Geeignete Schutzkolloide sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Kasein oder Kaseinat, Sojaprotein, Gelatine; Ligninsulfonate; synthetische Polymere wie Poly-(meth)acrylsäure, Polyvinylsulfonsäuren; Melaminformaldehydsulfonate, Naphthalinformaldehydsulfonate, Styrolmaleinsäure- und Vinylethermaleinsäure-Copolymere.

Bevorzugte Schutzkolloide sind teilverseifte Polyvinylalkohole mit einem Hydrolysegrad von 80 bis 95 Mol% und vorzugsweise einer Höpplerviskosität in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höppler-viskosität, in 4 %-iger wässriger Lösung von vorzugsweise 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 10 C-Atomen, welche gebenenfalls noch funktionelle Comonomere wie (Meth)acrylamid, (Meth)acrylsäure, Vinylsulfonat und deren Salze enthalten. Der Anteil der hydrophoben Einheiten beträgt vorzugsweise 0,1 bis 10 Gew.-%, der Anteil an funktionellem Comonomer vorzugsweise 0,1 bis 5 Gew.-%, jeweils bezogen auf das Gesamtgewicht des teilverseiften Polyvinylalkohols. Es können auch Gemische der genannten Polyvinylalkohole eingesetzt werden.

Die genannten Schutzkolloide haben jeweils in 1 Gew-%-iger Lösung in Wasser bei 23°C eine Brookfield-Viskosität von maximal 10 mPas. Die Bestimmung der Brookfield-Viskosität der 1 Gew.%-igen Lösung in Wasser erfolgt mit einem Brookfieldviskosimeter, nach Temperierung auf 23°C, unter Verwendung von Spindel 1 bzw. 2, bei 20 Umdrehungen pro Minute.

Zur Herstellung der in Wasser redispergierbaren Polymerpulver-Zusammensetzungen werden die Dispersionen, gegebenenfalls nach Zusatz von weiterem Schutzkolloid als Trocknungshilfe, sprühgetrocknet. Die Sprühtrocknung erfolgt dabei in üblichen Sprühtrocknungsanlagen, wobei die Zerstäubung mittels Ein-, Zwei-oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt. Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

In der Regel wird die Trocknungshilfe in einer Gesamtmenge von 0,5 bis 30 Gew.-%, bezogen auf die polymeren Bestandteile der Dispersion, eingesetzt. Das heißt die Gesamtmenge an Schutzkolloid vor dem Trocknungsvorgang kann 1 bis 30 Gew.-%, bezogen auf den Polymeranteil betragen. Bevorzugt werden 5 bis 20 Gew.-% Schutzkolloid bezogen auf den Polymeranteil eingesetzt. Die Menge an Schutzkolloid beträgt dabei vorzugsweise 1 bis 20 Gew.-%, besonders bevorzugt 3 bis 10 Gew.-%, jeweils bezogen auf den Polymeranteil im redispergierbaren Polymerpulver.

Geeignete Trocknungshilfen sind die bereits genannten Schutzkolloide. Bevorzugt sind teilverseifte Polyvinylalkohole und teilverseifte, hydrophob modifizierte Polyvinylalkohole mit jeweils einem Hydrolysegrad von 80 bis 95 Mol% und jeweils einer Höpplerviskosität in 4 %-iger wässriger Lösung von vorzugsweise 1 bis 30 mPas (Methode nach Höppler bei 20°C, DIN 53015).

Das Flockulierungsmittel b) wird während der Sprühtrocknung der wässrigen Dispersion des Basispolymerisats zugegeben. Dazu wird das Flockulierungsmittel b) gelöst in Wasser oder in einer wässrigen Salzlösung, oder emulgiert in Wasser oder einem Wasser/Lösungsmittel-Gemisch, und zusammen mit der wässrigen Dispersion des Basispolymerisats und der Trocknungshilfe sprühgetrocknet. Geeignete Salzlösungen sind wässrige Lösungen mit 0,1 bis 10 Gew.-%, vorzugsweise 2 bis 6 Gew.-%, Alkalimetallsalz, bezogen auf das Gesamtgewicht der wässrigen Lösung. Bevorzugt werden die Sulfate und Acetate von Lithium, Natrium und Kalium. Die Emulsionen der Flockulierungsmittel sind im Handel erhältlich.

In einer weiteren bevorzugten Ausführungsform wird die Trocknungshilfe in der wässrigen Salzlösung aufgelöst und anschließend das Flockulierungsmittel b) in der wässrigen Salzlösung aufgelöst. Diese Lösung wird anschließend mit der wässrigen Dispersion des Basispolymerisats sprühgetrocknet.

Bei der Verdüsung hat sich vielfach ein Gehalt von bis zu 1,5 Gew.-% Antischaummittel, bezogen auf das Basispolymerisat, als günstig erwiesen. Ein Beispiel für ein Antischaummittel ist Agitan^{R} 299 von Münzing.

Die in Wasser redispergierbaren Polymerpulver-Zusammensetzungen können auch mit einem Hydrophobierungsmittel modifiziert werden. Dazu wird bei der Sprühtrocknung auch noch Hydrophobierungsmittel zugegeben. Geeignete Hydrophobierungsmittel sind Organosiliciumverbindungen sowie Fettsäuren und Fettsäureester, wie in der EP 741760 B1 und der EP 765898 A2 beschrieben. Geeignete Organosiliciumverbindungen sind Kieselsäureester, Tetraorganosilane, Organoorganoxysilane, Polysilane. Bevorzugt werden die Organoorganoxysilane SiRₙ(OR')₄₋ₙ mit n = 1 bis 3, insbesondere Isooctyltriethoxysilan, n-Octyltriethoxysilan, Hexadecyltriethoxysilan. Geeignete Fettsäuren sind verzweigte und unverzweigte, gesättigte und ungesättigte Fettsäuren mit jeweils 8 bis 22 C-Atomen. Geeignete Fettsäureester sind die C₁-bis C₈-Alkylester der C₈- bis C₂₂-Fettsäuren. Geeignet sind auch die Mono- und Diglykolester der C₈- bis C₂₂-Fettsäuren. Geeignet sind auch die Mono-, Di- und Tri-Fettsäureester des Glycerins mit den C₈- bis C₂₂-Fettsäuren. Bevorzugt sind die Mono- und Diglykolester der Laurinsäure und der Ölsäure, sowie die Mono-, Di- und Tri-Fettsäureester des Glycerins mit der Laurinsäure und der Ölsäure. Am meisten bevorzugt sind die entsprechenden Ester der ungesättigten Fettsäuren wie der Ölsäure. Die genannten Hydrophobierungsmittel können allein oder im Gemisch eingesetzt werden. Im Allgemeinen werden diese in einer Menge von 0,5 bis 20 Gew.-%, vorzugsweise 1 bis 10 Gew.-%, jeweils bezogen auf das Gesamtgewicht der polymeren Bestandteile, eingesetzt.

Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise 1 bis 30 Gew.-%, bezogen auf das Gesamtgewicht der polymeren Bestandteile, ausgerüstet werden. Beispiele für Antiblockmittel sind Ca- bzw. Mg-Carbonat, Talk, Gips, Kieselsäure, Kaoline wie Metakaolin, Silicate mit Teilchengrößen vorzugsweise im Bereich von 10 nm bis 10 µm.

Die in Wasser redispergierbaren Polymerpulver-Zusammensetzungen können in Pulverform oder dispergiert in Wasser zur Bodenverfestigung, Staubbindung und zur Bindung von Fugensand, beispielsweise in Pflasterfugen, verwendet werden. Die wässrige Dispersion wird dabei durch einfaches Einrühren der Polymerpulver-Zusammensetzung in Wasser erhalten.

Die für die Staubbindung und Bodenverfestigung erforderlichen Mengen hängen vom Einsatzgebiet ab. Sie sind dem Fachmann bekannt und können durch einfache Versuche festgestellt und optimiert werden. Im Allgemeinen liegen die Einsatzmengen bei 0,01 bis 5 Gew.-%, vorzugsweise bei 0,2 bis 2 Gew.-% der in Wasser redispergierbaren Polymerpulver-Zusammensetzung, bezogen auf das zu verfestigende Erdmaterial.

Die in Wasser redispergierbare Polymerpulver-Zusammensetzung eignet sich für die Bodenverfestigung und die Staubbindung bei einer Vielzahl von Untergründen. Beispielsweise zur Verfestigung von unbefestigten Straßen, zur Verfestigung von Hängen und Halden, zur Verfestigung von unbefestigten Parkplätzen, Landebahnen oder Sportplätzen. Zur Bodenverfestigung kann der jeweilige Untergrund bis zu einer Tiefe von 1 bis 500 mm, vorzugsweise 50 bis 150 mm, aufgelockert werden oder abgetragen werden, und das lose Material mit der Polymerpulver-Zusammensetzung oder deren wässrigen Dispersion vermischt werden. In der Regel wird der so vorbereitete Untergrund anschließend geebnet und verdichtet. Alternativ dazu kann die Polymerpulver-Zusammensetzung oder deren wässrige Dispersion auf den unbehandelten Untergrund aufgesprüht werden.

Die in Wasser redispergierbare Polymerpulver-Zusammensetzung kann auch zusammen mit hydraulisch abbindenden Bindemitteln, beispielsweise Zement oder Gips, appliziert werden. Mit dieser Kombination wird eine Verbesserung sowohl der Abbindung als auch der Trocknungszeit erreicht.

Die in Wasser redispergierbare Polymerpulver-Zusammensetzung eignet sich auch als Bindemittel oder als Cobinder für Bauanwendungen wie. z.B. in Baukleber-, Dichtungsschlämmen-, Reparaturmörtel-Rezepturen, vor allem wenn in solchen Rezepturen als Füllstoff lehmhaltige Sande zum Einsatz kommen.

Mit der vorliegenden Erfindung werden homogene Pulverzusammensetzungen aus polymerem Bindemittel und Flockulierungsmittel erhalten, in denen die beiden Komponenten trotz unterschiedlicher Löslichkeit und Dispergierbarkeit gleichmäßig verteilt sind. Dies ist darauf zurückzuführen, dass das Flockulierungsmittel gemeinsam mit der wässrigen Dispersion des Basispolymerisats und der Trocknungshilfe sprühgetrocknet wird. In dieser Darreichungsform können auch hochmolekulare Flockulierungsmittel, welche mit Wasser zu einer inhomogenen Gelbildung neigen, leicht appliziert werden. Es können damit Synergien der beiden Komponenten zur Bodenverfestigung genutzt werden.

In der Darreichungsform als in Wasser redispergierbare Polymerpulver wird das Flockulierungsmittel schnell und gleichmäßig in Wasser verteilt, was den Nachteil der schlechten Löslichkeit überwindet. Darüber hinaus wird mit dieser Darreichungsform die Feuchtigkeitsempfindlichkeit der Flockulierungsmittel reduziert und deren Lagerstabilität erhöht.

Die nachfolgenden Beispiele dienen der weiteren Erläuterung der Erfindung:
Testmethoden:
   Bestimmung der Blockfestigkeit (BF):
   Zur Bestimmung der Blockfestigkeit wurde das zu untersuchende Pulver in ein Eisenrohr mit Verschraubung gefüllt und danach mit einem Metallstempel belastet. Unter Belastung wurde es im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulvers bestimmt.
Die Blockstabilität wurde wie folgt klassifiziert:
   1 = sehr gute Blockstabilität
   2 = gute Blockstabilität
   3 = befriedigende Blockstabilität
   4 = nicht blockstabil, Pulver nach Zerdrücken nicht mehr rieselfähig.

### Beispiel 1:

Es wurden zuerst 53 g Natriumsulfat in 1350 g Wasser aufgelöst und dann 420 g einer 20-Gew.-%-igen wässrigen Lösung eines Polyvinylalkohols mit einer Höppler-Viskosität von 4 mPas und einem Hydrolysegrad von 88 Mol% (Mowiol 4-88 der Firma Kuraray) und 360 g einer 11-Gew.-%-igen wässrigen Lösung eines Polyvinylalkohols mit einer Höppler-Viskosität von 13 mPas und einem Hydrolysegrad von 88 Mol% (Mowiol 13-88 der Firma Kuraray) zugegeben und 10 Minuten gerührt.

Anschließend wurden 3,6 g eines Acrylamid-Acrylsäure-Copolymer-Pulvers mit 70 Gew.-% Acrylamid und 30 Gew.-% Acrylsäure (Flobond A 30 der Firma SNF) zu dieser Lösung gegeben und 4 Stunden gerührt.

Es wurde eine klare Lösung mit einer Viskosität von 61 mPas (Brookfield BF20, Spindel 1 bei 23°C) erhalten.

Zu dieser Lösung wurden 3 kg einer Polyvinylalkohol-stabilisierte Vinylacetat-Ethylen-Copolymer-Dispersion (93 Gew.-% Vinylacetat, 7 Gew.-% Ethylen, Tg = 16°C) mit einem Feststoffgehalt von 58 Gew.-% zugemischt und eine Stunde gerührt.

Es wurde eine homogene Dispersion mit einer Viskosität von 95 mPa.s (Brookfield BF20, Spindel 1 bei 23°C) erhalten, welche circa 0,2 Gew.-% Flockulierungsmittel, bezogen auf den Feststoffanteil enthielt.

Die Dispersion wurde dann mittels Zweistoffdüse versprüht. Als Verdüsungskomponente diente auf 4 bar vorgepreßte Luft. Die gebildeten Tropfen wurden mit auf 125°C erhitzter Luft im Gleichstrom getrocknet. Das erhaltene trockene Pulver wurde mit 3 Gew.-% Kaolin und 15 Gew.-% Calciumcarbonat versetzt, bezogen auf den Trockenanteil der Dispersion.

Nach der Sprühtrocknung wurde eine redispergierbare Polymerpulver-Zusammensetzung mit einer Blockfestigkeit von 2 erhalten. Trotz des Anteils an ultrahochmolekularem Flockulierungsmittel b) konnte ein blockfestes Pulver mit sehr guter Dispergierbarkeit und hervorragendem Absetzverhalten hergestellt werden.

### Vergleichsbeispiel 2:

Es wurden 5,6 g eines Acrylamid-Acrylsäure-Copolymers mit 70 Gew.-% Acrylamid und 30 Gew.-% Acrylsäure (Flobond A 30 der Firma SNF) als Pulver unter Rühren in 1.350 g Wasser ohne Natriumsulfat zugegeben. Nach einer Rührzeit von 8 Stunden wurde eine inhomogene, gelartige Lösung erhalten.

Auch nach der Zugabe der Polyvinylalkohol-Lösungen und der Polymerdispersion konnte keine homogene Dispersion mit niedriger Viskosität hergestellt werden.

Die Sprühtrocknung der Dispersion war nicht möglich.

### Beispiel 3:

29,2 kg einer Polyvinylalkohol-stabilisierte Vinylacetat-Ethylen-Copolymer-Dispersion (93 Gew.-% Vinylacetat, 7 Gew.-% Ethylen, Tg = 16°C) mit einem Feststoffgehalt von 58 Gew.-% wurden mit 9,1 kg Wasser, 3,6 kg einer 20-Gew.-%-igen wässrigen Lösung eines Polyvinylalkohols mit einer Höppler-Viskosität von 4 mPas und einem Hydrolysegrad von 88 Mol% (Mowiol 4-88 der Firma Kuraray) und 2,9 kg einer 11-Gew.-%-igen wässrigen Lösung eines Polyvinylalkohols mit einer Höppler-Viskosität von 13 mPas und einem Hydrolysegrad von 88 Mol% (Mowiol 13-88 der Firma Kuraray) abgemischt.

Anschließend wurden 112 g einer 30 Gew.-%-gen wässrigen Emulsion eines Acrylamid-Acrylsäure-Copolymers mit 70 Gew.-% Acrylamid und 30 Gew.-% Acrylsäure (Flobond-Emulsion L33 der Firma SNF) zugegeben und 2 Stunden gerührt. Es wurde eine homogene Mischung mit einer Viskosität von 250 mPas (Brookfield BF20, SP1 bei 23°C) erhalten.

Die Mischung wurde dann mittels Zweistoffdüse versprüht. Als Verdüsungskomponente diente auf 4 bar vorgepresste Luft. Die gebildeten Tropfen wurden mit auf 125°C erhitzter Luft im Gleichstrom getrocknet. Das erhaltene trockene Pulver wurde mit 3 Gew.-% Kaolin und 15 Gew.-% Calciumcarbonat, bezogen auf den Trockenanteil der Mischung versetzt.

Die Blockstabilität lag bei 2.

### Vergleichsbeispiel 4:

Es wurde analog Beispiel 3 vorgegangen mit dem Unterschied, dass zu der Polyvinylalkohol-stabilisierten Vinylacetat-Ethylen-Copolymer-Dispersion kein Flockulierungsmittel zugegeben wurde, und diese getrocknet wurde.

Die Blockstabilität lag bei 3.

### Beispiel 5:

Es wurde analog Beispiel 3 vorgegangen, mit dem Unterschied, dass anstelle von 3,6 kg einer 20-Gew.-%-igen wässrigen Lösung eines Polyvinylalkohols mit einer Höppler-Viskosität von 4 mPas und einem Hydrolysegrad von 88 Mol% (Mowiol 4-88 der Firma Kuraray) die gleiche Menge einer 20 Gew.-%-igen wässrigen Lösung eines teilverseiften Vinylacetat-VeoValO-Vinylsulfonat-Copolymerisats zugegeben wurde.

Die Blockstabilität des damit erhaltenen Pulvers lag bei 2.

### Vergleichsbeispiel 6:

1000 g des in Vergleichsbeispiel 4 erhaltenen Dispersionspulvers wurden mit 1,6 g eines Acrylamid-Acrylsäure-Copolymer-Pulvers mit 70 Gew.-% Acrylamid und 30 Gew.-% Acrylsäure (Flobond A 30 der Firma SNF) mit einem Pulvermischer (GFL Überkopf-Schüttler 3040, GFL Gesellschaft für Labortechnik) vermischt.

### Testung der Bodenverfestigung:

### Herstellung der Probekörper:

Es wurden jeweils 900 g Lehm, 100 g Milke Zement CEM 42,6, 260 g Wasser und 40 g Dispersionspulver-Zusammensetzung aus den Beispielen bzw. Vergleichsbeispielen in einem Mörtelmischer (Firma Toni-Technik) 2 Minuten gemischt und anschließend zu Probekörpern in Form gegossen. Die Probekörper hatten jeweils folgende Abmessungen: Länge 15,3 cm, Breite 3,8 cm und Höhe 3,8 cm). Nach 24 Stunden wurden die Probekörper aus der Form herausgenommen und bei Normklima (23°C) gelagert.

Nach 28 Tagen wurden die Biegezug- und Druckfestigkeit nach DIN EN 12808-3 gemessen.

### Vergleichsbeispiel 7:

Bei der Herstellung der Probekörper wurden anstelle von 40 g Dispersionspulver-Zusammensetzung 80 mg eines Acrylamid-Acrylsäure-Copolymer-Pulvers mit 70 Gew.-% Acrylamid und 30 Gew.-% Acrylsäure (Flobond A 30 der Firma SNF) eingesetzt. Es resultierten rissige Probekörper, welche bei der Messung zerfallen sind.

Die Ergebnisse sind in Tabelle 1 zusammengefasst.

**Tabelle 1:**

| Pulver | Biegezugfestigkeit [N/mm²] | Druckfestigkeit [N/mm²] |
|---|---|---|
| Bsp. 1 | 0,5 | 2,5 |
| Bsp. 3 | 0,6 | 2,6 |
| V.bsp. 4 | 0,2 | 0,9 |
| Bsp. 5 | 0,7 | 3,5 |
| V.bsp. 6 | 0,1 | 0,8 |

Der Vergleich der Beispiel 1, 3, 5 mit Vergleichsbeispiel 6 zeigt, dass die mit dem Flockulierungsmittel modifizierten Dispersionspulver bessere mechanische Eigenschaften zeigen als eine Pulvermischung eines Dispersionspulvers mit einem pulverförmigen Flockulierungsmittel. Bei der Pulver-Pulver-Mischung aus Vergleichsbeispiel 6 konnten sich die Pulverteilchen des Flockulierungsmittels bei kurzen Mischzeiten und relativ geringer Wassermenge in Anwesenheit von Lehm, Zement und Polymerpulver nicht auflösen. Die Bindewirkung ist geringer als bei dem nicht modifizierten Dispersionspulver aus Vergleichsbeispiel 4.

Überraschenderweise wurden selbst mit geringen Anteilen an Flockulierungsmittel in den Beispielen 1, 3, 5 erheblich bessere Werte erhalten als mit dem nicht modifizierten Dispersionspulver aus Vergleichsbeispiel 4.

Das beste Ergebnis konnte mit Beispiel 5 erzielt werden, da der darin eingesetzte modifizierte Polyvinylalkohol eine Reduzierung der Viskosität bei der Anwendung bewirkte. Dadurch bekommt man eine bessere Redispergierung von Dispersionspulver und anorganischen Partikeln.

## Patentansprüche

1. In Wasser redispergierbare Polymerpulver-Zusammensetzung enthaltend
a) ein Basispolymerisat von einem oder mehreren Monomeren aus der Gruppe enthaltend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide,
b) ein oder mehrere Flockulierungsmittel aus der Gruppe enthaltend Acrylamid-Homopolymerisate oder Acrylamid-Copolymerisate von Acrylamid mit einem oder mehreren Monomeren aus der Gruppe enthaltend Methacrylamid, Acrylsäure, Methacrylsäure, Acrylnitril, 2-Acrylamido-2-methylpropan-sulfonsäure, wobei die Flockulierungsmittel b) jeweils in 1 Gew%-iger Lösung in Wasser bei 23°C eine Brookfield-Viskosität von mindestens 20 mPas aufweisen, und die Bestimmung der Brookfield-Viskosität der 1 Gew.-%-igen Lösung in Wasser mit einem Brookfield-Viskosimeter, nach Temperierung auf 23°C, unter Verwendung von Spindel 1 bzw. 2, bei 20 Umdrehungen pro Minute erfolgt.

2. In Wasser redispergierbare Polymerpulver-Zusammensetzung nach Anspruch 1, **dadurch gekennzeichnet, dass** als Flockulierungsmittel b) Copolymerisate des Acrylamids mit Acrylsäure und/oder 2-Acrylamido-2-methylpropansulfonsäure enthalten sind.

3. In Wasser redispergierbare Polymerpulver-Zusammensetzung nach Anspruch 1, **dadurch gekennzeichnet, dass** als Flockulierungsmittel b1) Copolymerisate, welche 60 bis 90 Gew.-% Acrylamid-Einheiten und 10 bis 40 Gew.-% Acrylsäure-Einheiten enthalten, enthalten sind.

4. In Wasser redispergierbare Polymerpulver-Zusammensetzung nach Anspruch 1 bis 3, **dadurch gekennzeichnet, dass** 0,05 bis 2,0 Gew.-%, Flockulierungsmittel b), jeweils bezogen auf das Gesamtgewicht der polymeren Bestandteile der in Wasser redispergierbaren Polymerpulver-Zusammensetzung, enthalten sind.

5. In Wasser redispergierbare Polymerpulver-Zusammensetzung nach Anspruch 1 bis 4, **dadurch gekennzeichnet, dass** als Basispolymerisat eines aus der Gruppe umfassend Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate, enthalten ist.

6. In Wasser redispergierbare Polymerpulver-Zusammensetzung nach Anspruch 1 bis 5, **dadurch gekennzeichnet, dass** ein Hydrophobierungsmittel aus der Gruppe der Organosiliciumverbindungen sowie Fettsäuren und Fettsäureester enthalten ist.

7. Verfahren zur Herstellung von in Wasser redispergierbaren Polymerpulver-Zusammensetzungen nach Anspruch 1 bis 6 mittels Sprühtrocknung der wässrigen Dispersion des Basispolymerisats a) in Gegenwart des Flockulierungsmittels b) und einer Trocknungshilfe, **dadurch gekennzeichnet, dass** das Flockulierungsmittel b), gelöst in Wasser oder in einer wässrigen Salzlösung gelöst, zusammen mit der wässrigen Dispersion des Basispolymerisats und der Trocknungshilfe sprühgetrocknet wird.

8. Verfahren zur Herstellung von in Wasser redispergierbaren Polymerpulver-Zusammensetzungen nach Anspruch 1 bis 6 mittels Sprühtrocknung der wässrigen Dispersion des Basispolymerisats a) in Gegenwart des Flockulierungsmittels b) und einer Trocknungshilfe, **dadurch gekennzeichnet, dass** das Flockulierungsmittel b) in einer wässrigen Emulsion zusammen mit der wässrigen Dispersion des Basispolymerisats und der Trocknungshilfe sprühgetrocknet wird.

9. Verfahren zur Herstellung von in Wasser redispergierbaren Polymerpulver-Zusammensetzungen nach Anspruch 7 oder 8 mittels Sprühtrocknung der wässrigen Dispersion des Basispolymerisats a) in Gegenwart des Flockulierungsmittels b) und einer Trocknungshilfe, **dadurch gekennzeichnet, dass** als Trocknungshilfe mindestens ein Polyvinylalkohol aus der Gruppe umfassend teilverseifte Polyvinylalkohole und teilverseifte, hydrophob modifizierte Polyvinylalkohole mit jeweils einem Hydrolysegrad von 80 bis 95 Mol% und jeweils einer Höpplerviskosität in 4 %-iger wässriger Lösung von 1 bis 30 mPas, eingesetzt wird.

10. Verwendung der in Wasser redispergierbaren Polymerpulver-Zusammensetzungen nach Anspruch 1 bis 6, in Pulverform oder dispergiert in Wasser, zur Staubbindung.

11. Verwendung der in Wasser redispergierbaren Polymerpulver-Zusammensetzungen nach Anspruch 1 bis 6, in Pulverform oder dispergiert in Wasser, zur Bodenverfestigung.

12. Verwendung der in Wasser redispergierbaren Polymerpulver-Zusammensetzungen nach Anspruch 1 bis 6, in Pulverform oder dispergiert in Wasser, zur Bindung von Fugensand.

13. Verwendung der in Wasser redispergierbaren Polymerpulver-Zusammensetzungen nach Anspruch 1 bis 6, in Pulverform oder dispergiert in Wasser, als Bindemittel oder als Cobinder in Bauanwendungen wie in Baukleber-, Dichtungsschlämmen-, Reparaturmörtel-Rezepturen.

14. Verwendung nach Anspruch 10 bis 13, wobei die in Wasser redispergierbare Polymerpulver-Zusammensetzung zusammen mit hydraulisch abbindenden Bindemitteln appliziert wird.

## Claims

1. Water-redispersible polymer powder composition comprising
a) a base polymer of one or more monomers from the group containing vinyl esters of unbranched or branched alkylcarboxylic acids having 1 to 15 carbon atoms, methacrylic esters and acrylic esters of alcohols having 1 to 15 carbon atoms, vinylaromatics, olefins, dienes and vinyl halides,
b) one or more flocculating agents from the group containing acrylamide homopolymers or acrylamide copolymers of acrylamide with one or more monomers from the group containing methacrylamide, acrylic acid, methacrylic acid, acrylonitrile, 2-acrylamido-2-methylpropanesulfonic acid, where the flocculating agents b) have a Brookfield viscosity of at least 20 mPas each in 1 wt% solution in water at 23°C, and the Brookfield viscosity of the 1 wt% solution in water is determined with a Brookfield viscometer, after conditioning to 23°C, using spindle 1 or 2, at 20 revolutions per minute.

2. Water-redispersible polymer powder composition according to Claim 1, **characterized in that** flocculating agents b) comprised are copolymers of acrylamide with acrylic acid and/or 2-acrylamido-2-methylpropanesulfonic acid.

3. Water-redispersible polymer powder composition according to Claim 1, **characterized in that** flocculating agents b1) comprised are copolymers which contain 60 to 90 wt% of acrylamide units and 10 to 40 wt% of acrylic acid units.

4. Water-redispersible polymer powder composition according to Claim 1 to 3, **characterized in that** it comprises 0.05 to 2.0 wt% of flocculating agents b), based in each case on the total weight of the polymeric constituents of the water-redispersible polymer powder composition.

5. Water-redispersible polymer powder composition according to Claim 1 to 4, **characterized in that** it comprises as base polymer a base polymer from the group encompassing vinyl acetate homopolymers, copolymers of vinyl acetate with ethylene, copolymers of vinyl acetate with ethylene and one or more further vinyl esters, copolymers of vinyl acetate with ethylene and acrylic esters, copolymers of vinyl acetate with ethylene and vinyl chloride, styrene-acrylic ester copolymers and styrene-1,3-butadiene copolymers.

6. Water-redispersible polymer powder composition according to Claim 1 to 5, **characterized in that** it comprises a hydrophobizing agent from the group of the organosilicon compounds and also fatty acids and fatty acid esters.

7. Process for producing water-redispersible polymer powder compositions according to Claim 1 to 6 by means of spray drying of the aqueous dispersion of the base polymer a) in the presence of the flocculating agent b) and a drying aid, **characterized in that** the flocculating agent b) is spray-dried, in solution in water or in solution in an aqueous salt solution, together with the aqueous dispersion of the base polymer and the drying aid.

8. Process for producing water-redispersible polymer powder compositions according to Claim 1 to 6 by means of spray drying of the aqueous dispersion of the base polymer a) in the presence of the flocculating agent b) and a drying aid, **characterized in that** the flocculating agent b) is spray-dried in an aqueous emulsion together with the aqueous dispersion of the base polymer and the drying aid.

9. Process for producing water-redispersible polymer powder compositions according to Claim 7 or 8 by means of spray drying of the aqueous dispersion of the base polymer a) in the presence of the flocculating agent b) and a drying aid, **characterized in that** the drying aid used comprises at least one polyvinyl alcohol from the group encompassing partially hydrolyzed polyvinyl alcohols and partially hydrolyzed, hydrophobically modified polyvinyl alcohols each having a degree of hydrolysis of 80 to 95 mol% and each having a Hoppler viscosity in 4% aqueous solution of 1 to 30 mPas.

10. Use of the water-redispersible polymer powder compositions according to Claim 1 to 6, in powder form or in dispersion in water, for binding dust.

11. Use of the water-redispersible polymer powder compositions according to Claim 1 to 6, in powder form or in dispersion in water, for consolidating soil.

12. Use of the water-redispersible polymer powder compositions according to Claim 1 to 6, in powder form or in dispersion in water, for binding jointing sand.

13. Use of the water-redispersible polymer powder compositions according to Claim 1 to 6, in powder form or in dispersion in water, as binders or as cobinders in construction applications such as in construction adhesive formulations, grout formulations and repair mortar formulations.

14. Use according to Claim 10 to 13, where the water-redispersible polymer powder composition is applied together with hydraulically setting binders.

## Revendications

1. Composition de poudre polymère redispersible dans l'eau, contenant
a) un polymère de base constitué par un ou plusieurs monomères du groupe comprenant les esters vinyliques d'acides alkylcarboxyliques non ramifiés ou ramifiés comprenant 1 à 15 atomes de carbone, les esters de l'acide méthacrylique et les esters de l'acide acrylique d'alcools comprenant 1 à 15 atomes de carbone, les aromatiques de vinyle, les oléfines, les diènes et les halogénures de vinyle,
b) un ou plusieurs floculants du groupe contenant les homopolymères d'acrylamide ou les copolymères d'acrylamide avec un ou plusieurs monomères du groupe contenant le méthacrylamide, l'acide acrylique, l'acide méthacrylique, l'acrylonitrile, l'acide 2-acrylamido-2-méthylpropanesulfonique, les floculants b) présentant à chaque fois, dans une solution à 1% dans de l'eau à 23°C, une viscosité de Brookfield d'au moins 20 mPa.s et la détermination de la viscosité de Brookfield de la solution à 1% en poids dans de l'eau ayant lieu à l'aide d'un viscosimètre de Brookfield après un équilibrage thermique à 23°C, à l'aide d'un mobile 1 ou 2, à 20 tr/min.

2. Composition de poudre polymère redispersible dans l'eau selon la revendication 1, **caractérisée en ce que** des copolymères de l'acrylamide avec de l'acide acrylique et/ou de l'acide 2-acrylamido-2-méthylpropanesulfonique sont contenus comme floculants b).

3. Composition de poudre polymère redispersible dans l'eau selon la revendication 1, **caractérisée en ce que** des copolymères qui contiennent 60 à 90% en poids de motifs d'acrylamide et 10 à 40% en poids de motifs d'acide acrylique sont contenus comme floculants b1).

4. Composition de poudre polymère redispersible dans l'eau selon la revendication 1 à 3, **caractérisée en ce qu'**elle contient 0,05 à 2,0% en poids de floculants b), à chaque fois par rapport au poids total des constituants polymères de la composition de poudre polymère redispersible dans l'eau.

5. Composition de poudre polymère redispersible dans l'eau selon la revendication 1 à 4, **caractérisée en ce qu'**elle contient comme polymère de base un polymère du groupe comprenant les homopolymères d'acétate de vinyle, les copolymères d'acétate de vinyle avec de l'éthylène, les copolymères d'acétate de vinyle avec de l'éthylène et un ou de plusieurs autres esters de vinyle, les copolymères d'acétate de vinyle avec de l'éthylène et des esters d'acide acrylique, les copolymères d'acétate de vinyle avec de l'éthylène et du chlorure de vinyle, les copolymères de styrène-ester de l'acide acrylique, les copolymères de styrène-1,3-butadiène.

6. Composition de poudre polymère redispersible dans l'eau selon la revendication 1 à 5, **caractérisée en ce qu'**elle contient un agent d'hydrofugation du groupe des composés organosiliciés ainsi que des acides gras et des esters d'acides gras.

7. Procédé pour la préparation de compositions de poudre polymère redispersibles dans l'eau selon la revendication 1 à 6 par séchage par pulvérisation de la dispersion aqueuse du polymère de base a) en présence du floculant b) et d'un adjuvant de séchage, **caractérisé en ce que** le floculant b), dissous dans de l'eau ou dans une solution aqueuse de sel, est séché par pulvérisation conjointement avec la dispersion aqueuse du polymère de base et de l'adjuvant de séchage.

8. Procédé pour la préparation de compositions de poudre polymère redispersibles dans l'eau selon la revendication 1 à 6 par séchage par pulvérisation de la dispersion aqueuse du polymère de base a) en présence du floculant b) et d'un adjuvant de séchage, **caractérisé en ce que** le floculant b) est séché par pulvérisation dans une émulsion aqueuse conjointement avec la dispersion aqueuse du polymère de base et de l'adjuvant de séchage.

9. Procédé pour la préparation de compositions de poudre polymère redispersibles dans l'eau selon la revendication 7 ou 8 par séchage par pulvérisation de la dispersion aqueuse du polymère de base a) en présence du floculant b) et d'un adjuvant de séchage, **caractérisé en ce qu'**on utilise comme adjuvant de séchage au moins un poly(alcool vinylique) du groupe comprenant les poly(alcools vinyliques) partiellement saponifiés et les poly(alcools vinyliques) partiellement saponifiés modifiés de manière hydrophobe, présentant à chaque fois un degré d'hydrolyse de 80 à 95% en mole et à chaque fois une viscosité de Höppler dans une solution aqueuse à 4% de 1 à 30 mPa.s.

10. Utilisation des compositions de poudre polymère redispersibles dans l'eau selon la revendication 1 à 6, sous forme de poudre ou sous forme dispersée dans de l'eau, pour la fixation de la poussière.

11. Utilisation des compositions de poudre polymère redispersibles dans l'eau selon la revendication 1 à 6, sous forme de poudre ou sous forme dispersée dans de l'eau, pour la consolidation du sol.

12. Utilisation des compositions de poudre polymère redispersibles dans l'eau selon la revendication 1 à 6, sous forme de poudre ou sous forme dispersée dans de l'eau, pour la fixation du sable de jointement.

13. Utilisation des compositions de poudre polymère redispersibles dans l'eau selon la revendication 1 à 6, sous forme de poudre ou sous forme dispersée dans l'eau, comme liant ou comme co-liant dans des applications de construction, telles que des formulations de colles de construction, de suspensions d'étanchéité, de mortiers de réparation.

14. Utilisation selon la revendication 10 à 13, la composition de poudre polymère redispersible dans l'eau étant appliquée conjointement avec des liants à prise hydraulique.
